Europäisches Patentamt

European Patent Office

Office européen des brevets

(11) Publication number: **0 121 999**
**B2**

(12) **NEW EUROPEAN PATENT SPECIFICATION**

(45) Date of publication of the new patent specification: **02.01.91**

(21) Application number: **84301298.0**

(22) Date of filing: **28.02.84**

(51) Int. Cl.⁵: **B 01 D 53/26,** B 01 D 46/24, B 01 D 46/00

(54) Improvements in flooded compressor separators.

(30) Priority: **08.04.83 AU 8806/83**

(43) Date of publication of application: **17.10.84 Bulletin 84/42**

(45) Publication of the grant of the patent: **10.12.86 Bulletin 86/50**

(45) Mention of the opposition decision: **02.01.91 Bulletin 91/01**

(84) Designated Contracting States: **AT BE CH DE FR GB IT LI LU NL SE**

(56) References cited:
**EP-A-0 060 231
DE-A-2 658 310
US-A-1 443 764
US-A-3 291 385**

(73) Proprietor: **CASH ENGINEERING CO. PTY. LIMITED
249 Bridge Road
Richmond, Vic. 3121 (AU)**

(72) Inventor: **Cash, John
249 Bridge Road
Richmond Victoria (AU)**
Inventor: **Kitchener, Anthony John
249 Bridge Road
Richmond Victoria (AU)**

(74) Representative: **Glawe, Delfs, Moll & Partner Patentanwälte
Postfach 26 01 62 Liebherrstrasse 20
D-8000 München 26 (DE)**

## Description

The present invention relates to separators commonly used with flooded compressor systems. The invention also evisages a compressor system including such an oil or other liquid separator.

Flooded compressor systems are most commonly used with rotary compressors including screw and vane type compressors and although the following description provides particular reference to a screw type compressor, it will be apparent to those skilled in the art that the invention is applicable to other compressor systems.

Commonly screw compressors comprise a pair of co-acting screw members respectively having male and female helically formed parts which, upon rotation of the screw members, co-operate with the compressor housing to compress gas. To avoid complicated engineering design in relation to rotatably mounting the co-operating screw members there has been developed a system of oil flooding such compressors such that the gas being compressed is mixed intimately with oil as it is compressed and this oil must thereafter be separated from the gas in a separating vessel before the compressed gas is available for its intended use. The separated oil is then recycled through a cooler and an oil filter for re-use in the compressor.

A separator for a compressor system of the aforementioned kind has conventionally comprised a pressure cylinder having its longitudinal axis in a generally vertical direction and having a generally cylindrical final filter element of the coalescent type surrounding the clean compressed gas outlet from the separator vessel. The oil/compressed gas mixture is introduced into the vessel above a sump or pool of oil in the base thereof and there may also be provided some mechanical separator means such as baffles to enable an initial separation of the gas from the oil with the oil dropping into the pool in the base of the vessel. The remainder of the oil is separated in the final filter which either also drops to the oil pool in the base of the separator vessel or is scavenged from the final filter element itself and returned to the compressor.

The previously described system has operated quite satisfactorily, however, there are a number of disadvantages, or problems associated with the system. One major problem is that the coalescent type filter employed in the separator vessel work efficiently only when they have to deal with small quantities of oil in a gas mixture. They in fact become totally ineffective if they are contacted or submerged in bulk oil. Now it necessarily occurs at certain periods of the cycle and when the system is shut down, that the pressure in the separating vessel is reduced. This factor results in the gas entrained in the oil in the sump of the separator expanding rapidly causing the mixture to expand resulting in foaming and a rapid rise in the oil level. It is normal for the oil volume to at least double in size and as a consequence the design of the separator vessel must be such as to permit this without the expanded oil volume contacting the coalescent filter.

DE—A—2658310 discloses a liquid/gas separator of the aforementioned type which recognises that during certain operational stages pressure might be reduced in the separator vessel causing the liquid/gas mixture to expand rapidly such that the tubular filter element region becomes filled with liquid. This specification proposes a solution attempting to avoid this problem by providing a dividing wall between the liquid pool in the base of the upright separator vessel and the filter element leading to the clean gas outlet from the upper end of the vessel. The dividing wall includes a main one way valve which is intended to allow liquid to flow downwardly to the main liquid pool in the base of the vessel but prevent liquid flowing upwardly during such conditions as discussed above denying access to the upper filter element region. A restrictor valve is also provided in the dividing wall to allow a slow escape of pressure from the lower cavity to the upper filter element region. The arrangement disclosed also proposes that the gal/liquid mixture from the compressor flow directly into the upper compartment. Reliable operation of this type of arrangement would largely depend on consistent and proper acuation of the main one way valve in the dividing wall preventing flow of liquid from the main lower pool and the prevention of accumulation of liquid in the upper filter compartment.

There is, however, a second somewhat related problem to the foregoing in that the compression process generates substantial heat and the necessary gas contact results in a relatively rapid oxidation of the oil. This factor means that the volume of oil maintained in the system should be kept as great as possible to thereby keep the length of time between oil changes as long as possible. As the separator vessel is a pressure vessel and is therefore expensive to produce both in terms of the materials used and the manufacturing processes required, it is desired from an economic point of view to keep the size of the vessel as small as possible. The separator vessel is a major element in the overall size of the compressor system and this is also a reason for endeavouring to maintain the vessel as small as possible. The proposal disclosed in DE—A—2658310 would certainly have no effect on enabling either a reduction in the size of the pressure vessel used or alternatively an increase in the volume of liquid oil capable of being used in the compressor system. For example, the provision of the dividing wall would either have no effect on the size of the vessel or would in fact tend to increase its size. To increase the liquid oil capacity of the system it would be necessary to increase the size of the lower cavity below the dividing wall which would inevitably increase the overall size of the pressure vessel.

Over recent years there have been further developments in relation to the design and arrangement of separator vessels in compressor systems. One such development involved locating the longitudinal axis of the separator essentially horizontal which has the advantage of minimising the overall height of the compressor system or package, however, such arrangements clearly accentuate the problem of liquid oil coming into contact with the filter element as the liquid pool is necessarily closer to the base of the filter element.

EP—A—O 060231 discloses an arrangement wherein the separator vessel with the filter element has an essentially horizontal axis. This disclosure proposes the use of a second vessel arranged beneath the main separator vessel for the liquid oil reservoir which has not only the effect of at least doubling the size of the separator but also requires complicated piping connections between the respective vessels.

The tendency has been for compressor manufacturers, and particularly screw compressor manufacturers, to design more compact or smaller equipment to meet the requirements of end users. A further development along these lines has involved a proposal for maintaining the compressor itself within a horizontally disposed separator vessel to minimise the overall size and dimensions of the compressor system and to also minimise some of the piping connections between the elements in the system. Such a design naturally substantially aggravated the problem of oil contact with the final coalescent filter element which has conventionally been dealt with by a number of different approaches wither separately or in combination. One approach is to try to lower the total oil volume within the system, however, this has the substantial disadvantage of requiring far more frequent down times for replacement of the oil. A second approach is to increase the size of volume of the separating vessel usually by increasing its length. Often in such arrangements the filter element is mounted with its longitudinal axis generally horizontal such that the gas discharge line passes through the end of the separating vessel. This is unsatisfactory as the lower regions of the filter element tend to become saturated with oil thereby substantially reducing its effectiveness and moreover the size of the separating vessel is a substantial disadvantage. A third alternative to to mount the filter element in an upwardly extending T branch from the main separating pressure vessel wall. This latter solution substantially increases the cost of producing the pressure separating vessel.

The principal objective of the present invention is to provide an improved separator for use with a flooded compressor system which will enable a reduction in size of the separator without a reduction in the liquid volume capacity therefor or will enable the use of an increased volume of liquid in the flooded compressor system.

Accordingly, the present invention provides a liquid/gas separator for use with a flooded compressor system, said separator comprising a pressure vessel having an interior including a first lower region adapted to maintain a pool of liquid therein and a second upper region for receiving a mixture of liquid and compressed gas therein above the pool of said liquid, a clean compressed gas outlet extending outwardly from said pressure vessel, a coalescent type filter element located directly above the area of said pool of liquid and interposed between said clean compressed gas outlet and the remainder of the interior of said pressure vessel, said filter element being arranged for receiving the mixture of liquid and compressed gas flowing to the clean gas outlet and for removing droplets of said liquid therefrom, said separator being characterized by wall means substantially impervious to the liquid forming a container member mounted inside said pressure vessel directly above and partly immersed in said pool of liquid and having a base and side walls, defining a dry sump region surrounding at least lower regions of said filter element but enabling the mixture of liquid and compressed gas to flow above said wall means to said filter element, inlet means to said pressure vessel enabling introduction of said mixture of liquid and compressed gas to said second region of the pressure vessel between the pool of said liquid and said impervious wall means and said separator being further characterized by shield means comprising a shroud interposed between the side walls of said container member and said filter element and surrounding and overlying said filter element at least in region(s) where said mixture of liquid and compressed gas is introduced into said dry sump region whereby liquid in said mixture is prevented from direct impingement on said filter element.

The arrangement of the liquid impervious wall means surrounding the lower regions of the filter element enables the liquid/air mixture to expand upwardly essentially around the wall means without danger of the liquid coming into contact with the filter element. It is possible to have the wall means sitting directly in the lower liquid pool under normal operating conditions which enables either larger quantities of liquid to be employed in the system or the use of a smaller separator vessel. Moreover the provision of the liquid/air inlet to the separator vessel being between the wall means and the liquid pool ensures that the liquid will not splash on to the filter element or accumulate in a fashion that would contact the filter element to the detriment of its performance characteristics.

Usually the liquid separated will be a coolant or lubricant and may be either a natural or synthetic liquid. The use of the teminology "oil" hereinafter should be interpreted as including such other liquid products. Conveniently the wall means comprises a container element having a base positioned beneath the filter element and upstanding wall or walls sealed with or integral with the base and substantially surrounding the filter element whereby the filter element is maintained within the dry sump region formed by the container element. Alternatively partitioning might be employed. Preferably one or more gas flow spaces or openings are provided adjacent to the upper regions of the filter element whereby gas together with small borne droplets of oil pass into engagement with the filter element to finally remove substantially all oil therefrom.

In addition the shield means interposed between the wall or walls of the container element and the filter element causes the gas and gas borne oil droplets to first flow downwardly between the wall or walls of the container element and the shroud element and then upwardly and through the filter element. Such a shield means will have the dual effects of further mechanical oil separation as well as preventing oil splashing on to the filter element should the oil level (in particularly adverse conditions) rise sufficiently to enter the container element.

Preferably, an oil scavenger line is provided for removing oil collected in the base region of the container element thereby preventing this oil volume rising sufficiently to contact the filter element.

According to a particular embodiment of the present invention the region(s) where said mixture of liquid and compressed gas is introduced into said dry sump region comprises at least one opening arranged above the liquid impervious wall means.

The shiled means overlies said at least one opening and extends to a position at least intermediate the lower extremity of said at least one opening.

This invention will be better understood from the following description of preferred embodiments given in relation to the accompanying drawings. In the drawings:

Figure 1 is a schematic flow diagram of a conventional screw compressor system showing a known embodiment of a separator;

Figure 2 is a schematic sectioned elevation view of a first preferred embodiment according to the present invention;

Figures 2A and 2B are schematic drawings demonstrating the operation of float controlled valves in liquid purge lines employed in the separator; and

Figure 3 is a schematic sectional elevation view of a second preferred embodiment according to the present invention.

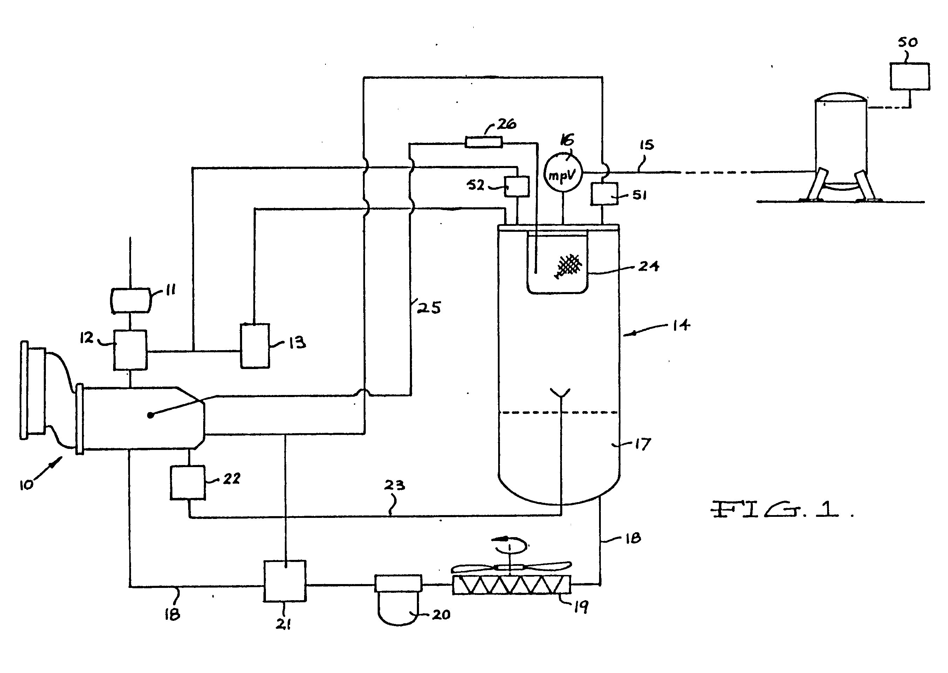

Referring initially to Figure 1 there is shown a schematic flow diagram for a conventional screw compressor system. In this system gas to be compressed is drawn into a screw compressor 10 through a gas filter 11 and an inlet flow control or throttle valve 12. The flow control valve 12 is controlled by a solenoid element 13 which senses that discharge pressure from the separator 14 has reached a predetermined level. The gas discharge line 15 from the separator includes a minimum pressure valve 16 which ensures that a minimum pressure is maintained in the separator whereby oil will always flow therefrom to the compressor 10 because of the pressure differential therebetween. The oil is maintained in a sump or pool 17 in the base of the separator 14 and is returned therefrom to the compressor 10 via line 18, cooler 19, and an oil filter 20 and oil stop valve 21. During operation of the compressor the stop valve 21 is maintained open to allow oil to flow to the compressor, however, during periods when the compressor 10 is not functioning oil is prevented from flooding the compressor, which would provide an unacceptably high start up loading, by closing the valve 21. Furthermore, the compressed gas/oil mixture exiting from the compressor 10 flows through a one way valve 22 along line 23 to be discharged into the separator 14 at a position usually above the sump or pool 17. The separator may include some mechanical separation means whereby oil will fall back into the pool and gas and gas borne oil droplets will flow relatively slowly upwardly to finally remove the gas borne oil droplets in a final filter element 24 of the coalescent type. Finally an oil scavenging line 25 is provided with a gas flow restriction 26 enable liquid oil collected in the filter element 24 to be returned (again by way of the presure differential) to the compressor 10.

Now in operation, if the rate of use of the compressed gas is less than the delivery rate of the compressor, the system pressure will rise and at a preset maximum a pressure switch 50 will sense this use and operate the solenoid element 13 to close the gas inlet valve 12. With the inlet gas supply substantially removed, the system pressure will fall until the pressure switch, on reaching a lower pre-set level will again operate the solenoid and re-open the valve 12. Now when the inlet valve 12 has been closed, the compressor is inducing gas at a very low inlet pressure due to the closed inlet valve, but the pressure in the separator is still relatively high, thereby causing the compressor to compress gas across a very high compression ratio compared to normal operating conditions. This would give rise to high unloaded power consumption and excessively high noise levels. To avoid this problem in the conventional arrangement the minimum pressure valve is provided with an integral non return valve and a pressure lowering valve 52 is also provided. This reduces the back pressure against which the compressor operates, however, it also gives rise to periodic lowering of separator pressure. Moreover, a stop dump valve 51 is provided to dump pressure from the separator on shut down of the compressor system. Both these situations cause the compressed gas mixed in with the oil in the sump 17 to expand rapidly causing the oil to foam and the oil level to rise rapidly. To prevent liquid oil from contacting the filter element 24 under such conditions, it has conventionally been proposed to either increase the size of the pressure tank of the separator 14 or alternatively to reduce the volume of the oil in the system. Both solutions have substantial disadvantages as previously indicated.

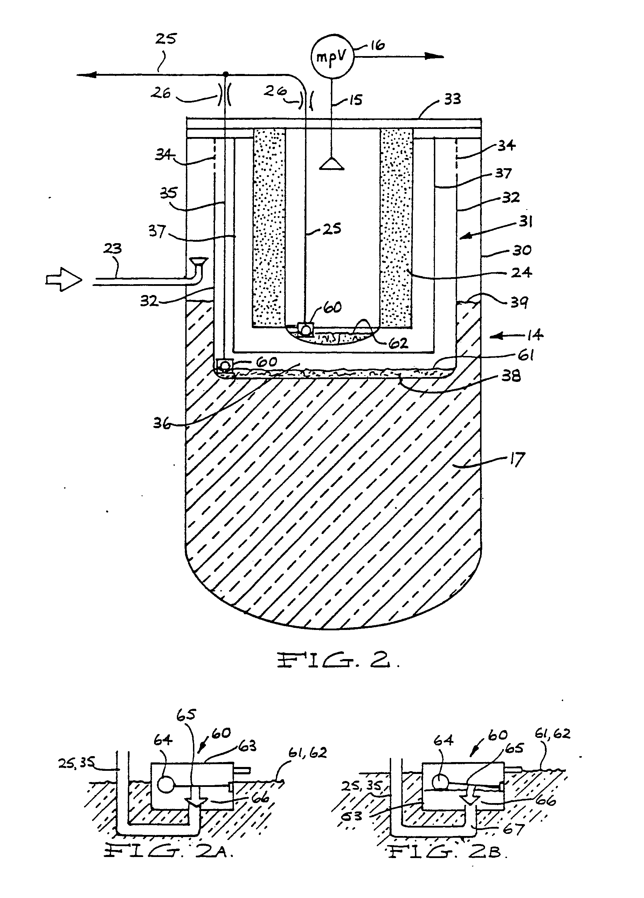

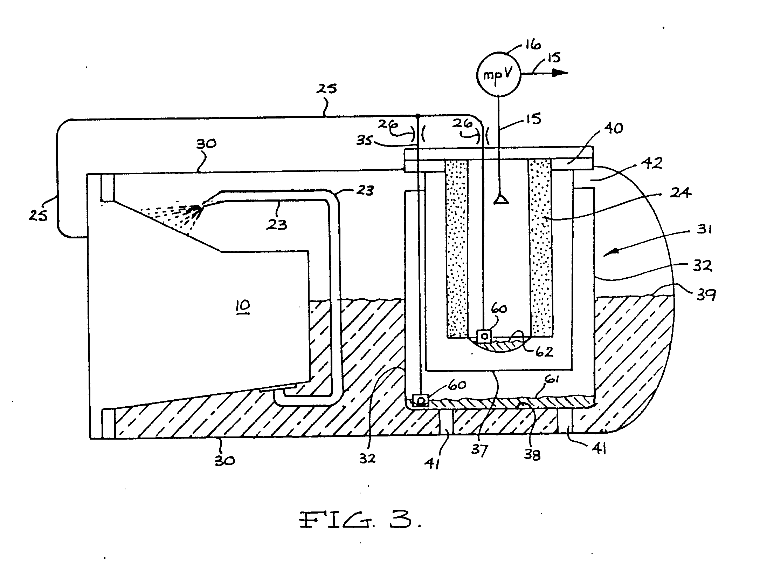

Figure 2 and 3 show preferred embodiments according to the present invention which provide advantageous solutions to the foregoing problem. Figure 2 shows a separator 14 adapted for use in a substantially conventional screw compression system as shown in Figure 1. The separator comprises a pressure tank 30 having a compressed gas and oil inlet line 23 and a compressed gas discharge line 15 which may include a minimum pressure valve 16. A substantially conventional final filter element 24 (which may be of the coalescent type) is provided surrounding the gas discharge outlet line 15 so that the gas/oil mixtures must pass therethrough to separate oil from the gas. Mounted generally surrounding the final filter element 24 is a container member 31 having a base 38 and side walls 32 mounted from an end wall 33 of the pressure vessel 30. The container member 31 includes a plurality of openings or spaces 34 at its upper regions adjacent the end wall 33 to enable gas borne oil droplets to pass inwardly into the container and thereby to the filter element 24. An oil scavenging line 25 extends from the internal regions of the filter element 24 and returns the oil collected to the screw compressor. In addition a second oil scavenging line 35 extends from the internal base region of the container member 31 to the line 25 and also returns oil collected to the screw compressor. Each of the lines 25 and 35 include a restrictor 26 to minimize gas loss from the separator. Moreover, each of the purge lines 25, 35 may include a float controlled valve 60 (see Figures 2A, 2B) which are arranged to positively prevent gas flow through the lines 25 or 35 such that gas losses are avoided. The float valve 60 may be located either within or externally of the separator unit. Each valve 60 comprises a chamber 63 with an access opening adapted to receive oil 61, 62 from either the base of the container member 31 or the base of the final filter element 24. An outlet opening 67 is provided leading to either purge line 25 or 35 and is opened (Figure 2B) or closed (Figure 2A) by a valve element 60 operated by a float member 64 and lever 65. It will be appreciated that other forms of valving might be used to ensure against gas losses along the respective purge lines. In this manner a substantially dry sump 36 is formed in which the filter element 24 is located. A further feature is the provision of shroud 37, also mounted from the end wall 34 and surrounding the filter element 24 between this element and the walls 32 of the container member 31. The shroud 37 performs a dual function in forcing gas and gas borne oil droplets to flow downwardly to the base of the filter element 24 before flowing upwardly therethrough to the discharge line 15. This provides additional mechanical oil separation and a better distribution of gas flow through the filter element 24 as well as protecting the filter element from possible oil splashing should the oil pool level 39 happen to rise to the level of the openings 34.

Figure 3 illustrates a somewhat similar arrangement to Figure 2 and consequently only the differences will be described hereinafter. In this embodiment, the screw compressor 10 is mounted within the separator pressure vessel 30 and as a consequence, the vessel 30 is arranged with its axis substantially horizontal. This arrangement provides some savings in overall size of the system as well as minimizing some of the piping requirements. The final filter element 24 is mounted through an opening in a side wall of the pressure vessel 30 and closed by a cap plate 40. Furthermore in this embodiment the container member 31 may be formed as a separate unit and connected to or sitting on base support elements 41 such that an upper restricted gap 42 is formed between the top of the side walls 32 of the container member and the closure plate 40. In addition the oil gas mixture line 23 exiting from the compressor 10 may include nozzle means to direct a spray against a desired area of the system to assist in an initial mechanical separation of oil from the compressed gas. The operation of the system shown in Figure 3 is essentially similar to that of Figure 2.

It has been found that with the present invention, it is possible to reduce the size of the pressure vessel 30 for a given performance size of the compressor and/or to increase the volume of oil used in the system.

**Claims**

1. A liquid/gas separator for use with a flooded compressor system, said separator comprising a pressure vessel (30) having an interior including a first lower region adapted to maintain a pool of liquid (17, 39) therein and second upper region for receiving a mixture of liquid and compressed gas therein above the pool of said liquid (17, 39), a clean compressed gas outlet (15) extending outwardly from said pressure vessel (30), coalescent type filter element (24) located directly above the area of said pool of liquid and interposed between said clean compressed gas outlet and the remainder of the interior of said pressure vessel, said filter element (24) being arranged for receiving the mixture of liquid and compressed gas flowing to the clean gas outlet (15) and for removing droplets of said liquid therefrom, said separator being characterized by wall means (32, 38) substantially impervious to the liquid forming a container member (31) mounted inside said pressue vessel (30) directly above and partly immersed in said pool of liquid and having a base (38) and side walls (32) defining a dry sump region, surrounding at least lower regions of said filter element (24) but enabling the mixture of liquid and compressed gas to flow above said wall means to said filter element (24), inlet means (23) to said pressure vessel enabling introduction of said mixture of liquid and compressed gas to said second region of the pressure vessel between the pool of said liquid (17, 39) and said impervious wall means (32, 38), and said separator being further characterized by shield means comprising a shroud (37) interposed between the side walls (32) of said container member (31) and said filter element and surrounding and overlying said filter element at least in region(s) where said mixture of liquid and compressed gas is introduced into said dry sump region whereby liquid in said mixture is prevented from direct impingement on said filter element.

2. A separator according to claim 1 characterized in that a liquid purge means (35) is provided leading from said dry sump region (36) at a location below the lower extremity of the filter element (24).

3. A separator according to claim 2 characterized in that said purge line (35) includes a float controlled valve (60) permitting the flow of substantially liquid only along said purge line.

4. A separator according to claim 3, characterized in that said purge line (35) also includes a restrictor (26) to minimize gas loss from the separator.

5. A separator according to any one of claims 1 to 4 characterized in that said filter element (24) is tubular in construction having an axis substantially parallel to the axis of said pressure vessel (30).

6. A separator according to any one of claims 1 to 4 characterized in that said filter element (24) is tubular in construction having an axis substantially perpendicular to the axis of said pressure vessel (30).

7. A flooded compressor system including a separator according to claim 6 and being further characterized by a compressor (10) mounted substantially within the pressure vessel (30) of said separator.

8. A flooded compressor system according to claim 7 characterized in that said compressor (10) includes means (23) for discharging the mixture of liquid and compressed gas directly in the second region of said pressure vessel (30).

9. A separator according to claim 1 characterized in that the region(s) where said mixture of liquid and compressed gas is introduced into said dry sump region comprises at least one opening (42, 34) arranged above the liquid impervious wall means (32, 38).

10. A separator according to claim 9 characterized in that said shield means (37) overlies said at least one opening (34) and extends to a position at least intermediate the lower extremity of said filter element (24) and said at least one opening (42, 34).

11. A separator according to claim 10 characterized in that said clean gas outlet is arranged in an upwardly facing wall of said pressure vessel (30), said wall means (32, 38) extending from a position adjacent to said upwardly facing wall downwardly therefrom and around said filter element (24) to substantially enclose the lower regions of said filter element (24), said open opening (34, 42) being located between said upwardly facing wall and said wall means (32, 38).

12. A separator according to claim 10 or claim 11 characterized in that a liquid purge line (35) is provided leading from said dry sump region (36) at a location below the lower extremity of the filter element (24).

13. A separator according to claim 12 characterized in that said purge line (35) includes a restrictor (26) and/or a float controlled valve (60) adapted to minimise gas loss from the separator.

14. A separator according to any one of claims 10 to 13 characterized in that said filter element (24) is tubular in construction having an axis substantially parallel to the axis of said pressure vessel (30).

15. A separator according to claim 14 characterized in that the axis of said tubular filter element (24) is substantially vertical.

16. A separator according to any one of claims 10 to 13 characterized in that said filter element (24) is tubular in construction having an axis substantially perpendicular to the axis of said pressure vessel (30).

17. A separator according to claim 16 characterized in that the axis of said tubular filter element (24) is substantially vertical.

18. A flooding compressor system including a separator according to claim 16 or claim 17 and further characterized in that a compressor (10) is mounted substantially within the pressure vessel (30) of said separator, said compressor including means (23) for discharging the mixture of liquid and compressed gas directly into said second region of said pressure vessel (30).

**Patentansprüche**

1. Flüsigkeits/Gasabscheider zur Verwendung in einem geflutetem Verdichtersystem, mit einem Druckgefäß (30), dessen Innenraum einen ersten, unteren Bereich zur Aufrechterhaltung eines Flüssigkeitssumpfes (17, 39) in demselben und einen zweiten, oberen Bereich zur Aufnahme einer Mischung von Flüssigkeit und Druckgas oberhalb des Flüssigkeitssumpfes (17, 39) umfaßt, einem Auslaß (15) für reines Druckgas, der sich von dem Druckgefäß (30) nach außen erstreckt, einem Filterelement (24) vom Koaleszenztyp, das unmittelbar über der Fläche des Flüssigkeitssumpfes angeordnet und zwischen dem Auslaß für reines Druckgas und dem restlichen Innenraum des Druckgefäßes eingesetzt ist, wobei das Filterelement (24) die zum Reingasauslaß (15) strömende Mischung aus Flüssigkeit und Druckgas empfängt und Tröpfchen daraus entfernt, wobei der Abscheider gekennzeichnet ist durch im wesentlichen flüssigkeitsundurchlässige Wände (32, 38), die einen Behälter (31) bilden, der innerhalb des Druckgefäbes (30) unmittelbar über dem Flüssigkeitssumpf unt teilweiswe in diesen entauchend angeordnet ist, einen Boden (38) und Seitenwände (32) aufweist und einen trockenen Sumpfbereich (36) begrenzt, der mindestens untere Bereiche des Filterelements (24) umgibt, es aber der Mischung aus Flüssigkeit und Druckgas gestattet, oberhalb der Wände zu dem Filterelement (24) zu strömen, wobei ein Einlaß (23) zu dem Druckgefäß die Einführung der Mischung aus Flüssigkeit und Druckgas zu dem zweiten Bereich des Druckgefäßes zwischen dem Flüssigkeitssumpf (17, 39) und den flüssigkeitsundurchlässigen Wänden (32, 38) gestattet, und wobei der Abscheider ferner gekennzeichnet ist durch eine Abschirmung in Form einer Schürze (37), die zwischen den Seitenwänden (32) des Behälters (31) und dem Filterelement angeordnet ist und das Filterelement umgibt und es mindestens in dem Bereich oder den Bereichen überlappt, wo die Mischung aus Flüssigkeit und Druckgas in den trockenen Sumpfbereich eingeführt wird, wodurch die Flüssigkeit in dem Gemisch an dem direkten Auftreffen auf das Filterelement gehindert wird.

2. Abscheider nach Anspruch 1, dadurch gekennzeichnet, dass eine Flüssigkeitsabflussleitung (35) vorgesehen ist, die an einer Stelle unter dem unteren Ende des Filterelements (24) aus dem trockenen Sumpfbereich (36) führt.

3. Abscheider nach Anspruch 2, dadurch gekennzeichnet, dass die Abflussleitung (35) ein Schwimmerventil (60) aufweist, das den Durchfluss von im wesentlichen nur Flüssigkeit durch die Abflussleitung gestattet.

4. Abscheider nach Anspruch 3, dadurch gekennzeichnet, dass die Abflussleitung (35) auch ein Drosselvorrichtung (26) aufweist, um Gasverluste aus dem Abscheider möglichst gering zu halten.

5. Abscheider nach irgendeinem der Ansprüche 1 bis 4, dadurch gekennzeichnet, dass das Filterelement (24) rohrförming ausgebildet ist und dass seine Achse wesentlich parallel zur Achse des Druckgefässes (30) verläuft.

6. Abscheider nach irgendeinem der Ansprüche 1 bis 4, dadurch gekennzeichnet, dass das Filterelement (24) rohrforming ausgebildet ist und dass seine Achse wesentlich senkrecht zur Achse des Druckgefässes (30) verläuft.

7. Überflutetes Verdichtersystem mit einem Abscheider nach Anspruch 6 und weiterhin gekennzeichnet durch einen wesentlich innerhalb des Druckgefässes (30) des Abscheiders angeordneten Verdichter (10).

8. Überflutetes Verdichtersystem nach Anspruch 7, dadurch gekennzeichnet, dass der Verichter (10) Mittel (23) für den direkten Ablass des Flüssigkeits-Druckgasgemisches in den zweiten Bereich des Druckgefässes (30) aufweist.

9. Abscheider nach Anspruch 1, dadurch gekennzeichnet, dass der Bereich (die Bereiche), wo das Flüssigkeits-Durchgasgemisch in den Trokkenen Sumpfbereich (36) eintritt, mindestens eine oberhalb der flüssigkeitsundurchlässigen Wände (32, 38) angeordnete Öffnung (42, 34) aufweist (aufweisen).

10. Abscheider nach Anspruch 9, dadurch gekennzeichnet, dass die Abschirmung (37) die mindestens eine Öffnung (34) überdeckt und sich bis zu einer Stelle wenigstens zwischen dem unteren Ende des Filterelements (24) und der mindestens einen Öffnung (42, 34) erstreckt.

11. Abscheider nach Anspruch 10, dadurch gekennzeichnet, dass der Auslass für reines Gas in einer nach oben gekehrten wand des Druckgefässes (30) angeordnet is, wobei sich die Wände (32, 38) von einer Stelle neben der nach oben gekehrten Wand nach unten und um das Filterelement (24) herum erstrecken, und die unteren Bereiche des Filterelements (24) wesentlich umgeben, wobei sich die Öffnung (34, 42) zwischen der nach oben gekehrten Wand und den Wänden (32, 38) befindet.

12. Abscheider nach Anspruch 10 oder Anspruch 11, dadurch gekennzeichnet, dass eine Flüssigkeitsabflussleitung (35) vorgesehen ist, die an einer Stelle unter dem unteren Ende des Filterelements (24) aus dem trockenen Sumpfbereich (36) führt.

13. Abscheider nach Anspruch 12, dadurch gekennzeichnet, dass die Abflussleitung (35) eine Drosselvorrichtung (26) und/oder ein Schwimmerventil (60) aufweist, um Gasverluste aus dem Abscheider möglichst gering zuhalten.

14. Abscheider nach irgendeinem der Ansprüche 10 bis 13, dadurch gekennzeichnet, dass das Filterelement (24) rohrförmig ausgebildet ist und dass seine Achse wesentlich parallel zur Achse des Druckgefässes (30) verläuft.

15. Abscheider nach Anspruch 14, dadurch gekennzeichnet, dass die Achse des rohrförmigen Filterelements (24) wesentlich senkrecht verläuft.

16. Abscheider nach irgendeinem der Ansprüche 10 bis 13, dadurch gekennzeichnet, dass das Filterelement (24) rorhförmig ausgebildet ist und dass seine Achse wesentlich senkrecht zur Achse des Druckgefässes (30) verläuft.

17. Abscheider nach Anspruch 16, dadurch gekennzeichnet, dass die Achse des rohrförmigen Filterelements (24) wesentlich senkrecht verläuft.

18. Überflutetes Verdichtersystem, das einen Abscheider nach Anspruch 16 oder Anspruch 17 aufweist und weiterhin dadurch gekennzeichnet wird, dass ein Verdichter (10) wesentlich innerhalb des Durchgefässes (30) des Abscheiders angeordnet ist, welcher Verdichter Mittel (23) für den direkten Ablass des Flüssigkeits-Druckgasgemisches in den zweiten Bereich des Druckgefässes (30) aufweist.

**Revendications**

1. Séparateur gaz/liquide destiné à être utilisé avec un système compresseur submergé, ledit séparateur comprenant un récipient de résistance à la pression (30) ayant un intérieur comprenant une première région inférieure capable de maintenir en son sein un mare de liquide (17, 39) et une seconde région supérieure destinée à recevoir en son sein un mélange de liquide et de gaz comprimé, audessus de la mare dudit liquide (17, 39), une sortie (15) de gaz comprimé propre, s'étendant vers l'extérieur à partir dudit récipient de résistance à la pression (30), un élément filtrant (24) du type coalescent, disposé directement au dessus de la zone de ladite mare de liquide et interposé entre ladite sortie de gaz comprimé propre et le reste de l'intérieur dudit récipient de résistance à la pression, ledit élément filtrant (24) étant disposé pour recevoir le mélange de liquide et de gaz comprimé s'écoulant vers la sortie (15) de gaz propre et pour en retirer des gouttelettes dudit liquide, ledit séparateur étant caractérisé par des moyens de paroi (32, 38) sensiblement imperméables au liquide, formant un élément de récipient (31) monté à l'intérieur dudit récipient de résistance à la pression (30) directement au-dessus et partiellement immergé dans ladite mare de liquide et ayant une base (38) et des parois latérales (32) définissant une région de carter sec, entourant au moins des régions inférieures dudit élément filtrant (24) mais permettant au mélange de liquide et de gaz comprimé de s'écouler audessus desdits moyens de paroi vers ledit élément filtrant (24), des moyens (23) d'entrée dans ledit récipient de résistance à la préssion permettant l'introduction dudit mélange de liquide et de gaz comprimé dans ladite deuxième région du récipient sous pression entre la mare dudit liquide (17, 39) et lesdits moyens de paroi imperméable (32, 38), et ledit séparateur étant en outre caractérisé par des moyens de protection comprenant une enveloppe de protection (37) interposée entre les parois latérales (32) dudit élément de récipient (31) et ledit élément filtrant et entourant et recouvrant ledit élément filtrant au moins dans une (ou des) région(s) où ledit mélange de liquide et de gaz comprimé est introduit dans ladite région de carter sec, ce qui permet d'empêcher ledit mélange de vernir heurter directement ledit élément filtrant.

2. Un séparateur selon la revendication 1, caractérisé en ce que des moyens de purge (35) du liquide sont prévus dans le carter sec (36) en dessous de l'extrémité inférieure de l'élément de filtrage (24).

3. Un séparateur selon la revendication 2, caractérisé en ce que la conduite de purge (35) comporte un valve commandée par flotteur (60) permettant sensiblement l'écoulement de liquide seul dand ladite conduite.

4. Un séparateur selon la revendication 3, caractérisé en ce que le conduite de purge (35) comporte aussi un passage étrangle (26) destiné à minimiser des pertes de gaz du séparateur.

5. Un séparateur selon l'une des revendications 1 à 4 caractérisé en ce que l'élément de filtrage (24) est de construction tubulaire avec un axe sensiblement parallèle à l'axe de l'enceinte de pression (30).

6. Un séparateur selon l'une des revendications 1 à 4 caractérisé en ce que l'élément de filtrage (24) est de construction tubulaire avec un axe sensiblement perpendiculaire à l'axe de l'enceinte de pression.

7. Un système de compresseur à bain d'huile comprenant un séparateur selon la revendication 6 et caractérisé per un compresseur (10) sensiblement monté dans l'enceinte de pression (30) du séparateur.

8. Un système de compresseur à liquide selon la revendication 7, caractérisé en ce que le compresseur (10) comporte des moyens (23) de décharge du mélange de liquide et gaz comprimé directement dans le deuxième région de l'enceinte de pression (30).

9. Un séparateur selon la revendication 1, caractérisé en ce que la ou les régions(s) d'introduction du mélange de liquide et gas comprimé dans le carter sec comprend (comprennent) au moins une ouverture (42, 34) aménagée au-dessus des parois étanches (32, 38).

10. Un séparateur selon la revendication 9, caractérisé en ce que les moyens d'écran (37) recouvrent au moins ladite ouverture (34) et s'étendent au moins jusqu'à une position intermédiaire entre l'extrémité inférieure de l'élément de filtrage (24) et au moins une ouverture (42, 34).

11. Un séparateur selon la revendication 10, caractérisé en ce que la sortie de gaz propre est aménagé dans une paroi en regard du haut de ladite enceinte de pression (30), les parois étanches (32, 34) s'étendant à partire d'une position adjacente à ladite paroi en regard du haut vers le bas et autour de l'élément de filtrage (24) de façon à entourer la partie inférieure de celui-ci ladite sortie (34, 42) étant située entre ladite paroi et les parois étanches (32, 38).

12. Un séparateur selon la revendication 10 ou 11 caractérisé en ce qu'il comporte un conduite de purge de liquide (35) partant d'un emplacement dans le carter sec (36) en dessous de l'extremite inferieure de l'élément de filtrage (24).

13. Un séparateur selon la revendication 12, caractérisé en ce que la conduite de purge (35) comprend un passage étranglé (26) et/ou une valve commandée par flotteur (60) destiné(s) à réduire des pertes de gaz du séparateur.

14. Un séparateur selon l'une des revendications 10 à 13, caractérisé en ce que l'élément de filtrage (24) présente un forme tubulaire avec un axe sensiblement parallèle à l'axe de l'enceinte de pression (30).

15. Un séparateur selon la revendication 14, caractérisé en ce que l'axe de l'élément de filtrage tubulaire (24) es sensiblement vertical.

16. Un séparateur selon l'une des revendications 10 à 13, caractérisé en ce que l'élément de filtrage (24) présente un forme tubulaire avec un axe sensiblement perpendiculaire à l'axe de l'enceinte de pression (30).

17. Un séparateur selon la revendication 16, caractérisé en ce que l'axe de l'élément de filtrage (24) est sensiblement vertical.

18. Un système de compresseur à bain d'huile comprenant un séparateur selon la revendication 16 ou 17 et caractérisé en ce qu'un compresseur (10) est sensiblement installé dand l'enceinte à pression (30) du séparateur, ledit compresseur comprenant des moyens (23) de décharge directe du mélange de liquide et gaz comprimé dans la deuxième région de l'enceinte de pression (30).

FIG.1.

EP 0 121 999 B2

FIG. 2.

FIG. 2A.

FIG. 2B.

FIG. 3.